Europäisches Patentamt

European Patent Office

Office européen des brevets

(11) Publication number: **0 253 551 B1**

(12) **EUROPEAN PATENT SPECIFICATION**

(45) Date of publication of patent specification: **17.06.92** (51) Int. Cl.⁵: **G06K 15/14**, G03G 15/22, G03G 17/04

(21) Application number: **87305974.5**

(22) Date of filing: **06.07.87**

(54) **Continuously variable printing method and apparatus.**

(30) Priority: **17.07.86 US 886343**

(43) Date of publication of application:
**20.01.88 Bulletin 88/03**

(45) Publication of the grant of the patent:
**17.06.92 Bulletin 92/25**

(84) Designated Contracting States:
**AT BE CH DE ES FR GB GR IT LI LU NL SE**

(56) References cited:
**AT-B- 305 769**
**AU-B- 445 175**
**LU-A- 57 367**
**US-A- 3 787 206**

**ELECTRONIOUE INDUSTRIELLE, no. 78, November 1984, pages 37-38, Paris, FR; C. GROSS: "Performances accrues des traceurs électrostatiques"**

(73) Proprietor: **MOORE BUSINESS FORMS, INC.**
**300 Lang Boulevard**
**Grand Island New York 14072-1697(US)**

(72) Inventor: **Escaloni, Lawrence**
**115 Greenhaven Terrace**
**Tonawanda New York 14150(US)**
Inventor: **Mendrykowski, John T.**
**8 Sweetwater Court**
**E. Amherst, New York 14051(US)**
Inventor: **Smith, Douglas M.**
**2247 Center Terrace Apt.No. 1**
**Grand Island New York 14072(US)**

(74) Representative: **Townsend, Derek Thomas et al**
**Fry, Heath & Spence Mill House Wandle Road**
**Beddington Croydon Surrey CR0 4SD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to printing methods and apparatus, and particularly those in which the information being printed may be continuously changed.

The art of printing is of course highly developed but heretofore printing presses have required shut-down for plate replacement in order to alter the information being printed. It is also known to produce coloured images comprising photoelectrophoretic imaging by exposing an imaging suspension of coloured light absorbing particles in a carrier liquid positioned between two electrodes to imagewise illumination in the presence of an electric field. Reference is made to mechanisms described in US Patent Specifications Nos. 3383933, 3384488, 3384565, 3384566, 3595770 and 3989366.

Also US Specification No 3787206 describes a photoelectrophoretic imaging method in which finely divided electrically photosensitive pigment particles in a carrier liquid are placed on top of a fixed electrode (substrate) and exposed to activating radiation from below the electrode. The particles are caused to deposit on another electrode which moves over the carrier liquid ,according to an imagewise pattern carried by one of the electrodes. Alternatively the imagewise pattern is determined by a filter through which the activating radiation passes. The liquid and substrate do not move.

Australian Specification No 65543/69 describes apparatus and a process for the preparation of particle suspensions free of agglomerates and refers particularly to a process for breaking interparticle bonds to separate particles within suspensions.

Australian Specification No 305769 describes a printing process including applying radiation to a substrate by means of a wire positioned adjacent the substrate and subsequently applying particles to the radiated substrate to produce a printed pattern.

Luxembourg Specification No 57367 refers to the imaging of an imaging member comprising a conducting substrate with softenable material containing electrically photosensitive particles in which a latent image is formed for example by electrostatic charging and exposing it to a pattern of radiation. The imaging member is then developed leaving an image of migrated particles corresponding to the radiation pattern. The specification describes a method of making the migration imaging member by transferring a uniform layer of particles on to a softenable layer whereby a fracturable layer of particles is embedded at the surface of the layer of softenable material.

The Journal Electronique Industrielle No 78 (November 1984) at pages 37 - 38 includes an article by Catherine Gross describing principles of electrostatic printing including applying a pattern by an array of electrodes to create electrostatic charges on paper. The paper is exposed to a liquid containing particles of carbon in suspension which particles are attracted and fixed to the paper where the charge is created to provide an image on the paper.

The object of this invention is to provide printing methods and apparatus which enable the user to change the printed information continuously.

According to the present invention printing apparatus comprises an electrically conductive substrate of given width,

means for forming a liquid film on the substrate, the liquid being a dielectric material with electrically chargeable particles therein,

an irradiating station whereat particle activating electromagnetic radiation is applied to the film from a source, and including means at the irradiating station to modulate the radiation;
means to establish an electric field through the film in the region whereat the activating energy impinges upon the film,

a particle removal member in contact with the film for removing predetermined particles from the film according to charges placed on certain particles due to the irradiating action and leaving in the film other of the particles not receiving the charges due to the irradiating action, thereby forming an image on the particle removal member in a pattern established by the modulation,

characterised in that the source is positioned to place the film between the source and the substrate, the means for forming the liquid film on the substrate, the irradiating station and the location where the particle removal member contacts the film are positioned as a group in sequence in that order, and

characterised by means for causing relative movement between the film bearing substrate and the aforesaid group of components in a direction to cause the substrate to move past the components in the aforesaid sequence, the irradiating station being located upstream of the position where the removal member contacts the film,

the arrangement being such that particles in the film will undergo a change in charge at the irradiating station due to the effect of the radiation and will migrate away from the substrate, and the migrated particles will be removed from the film by the removal member and placed on the removal member in a pattern established by the modulation of radiation at the irradiating station.

The invention also comprises a printing method.

## DESCRIPTION OF DRAWINGS

Figure 1 is a view in elevation of an illustrative embodiment of the invention;

Figure 2 is a plan view of the apparatus of Figure 1;

Figure 3 is a view in elevation of an illustrative embodiment in which use of a cylindrical substrate is shown;

Figure 4 is a cross-sectional view of a single wire device which may be used in the apparatus of Figure 1;

Figure 5 is a cross-sectional view of a two-wire device which may be used in the apparatus of Figure 1;

Figure 6 is a modification in which a particle removal member is a belt or web.

## DETAILED DESCRIPTION OF THE INVENTION

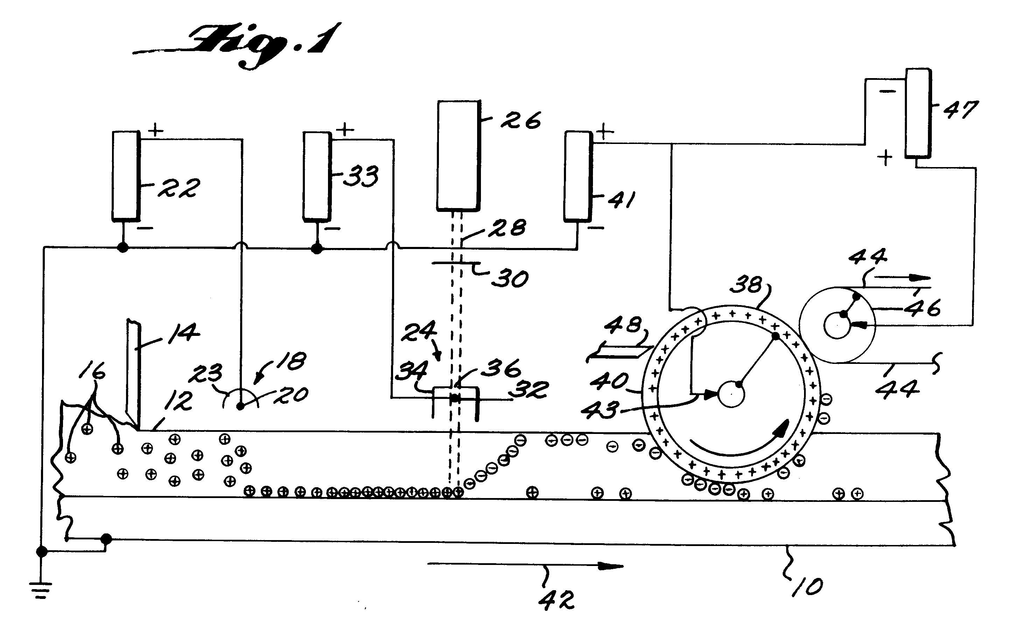

With reference to Fig 1, an electrically conductive substrate 10, of given length and width for example, the surface of a metallic cylinder, has a thin film 12 of a liquid dielectric material laid down upon it as by a doctor blade 14. The film may be a substance known as ink or toner, and may be approximately 0.2 to 5 mils thick. The film will have electrically chargeable particles 16 suspended in it which have been pre-charged to have a positive charge. The particles preferably are composed of photoactive pigments or photoactive composite particles, which have been suspended in an ink vehicle, or in a dielectric solvent such as an aliphatic hydrocarbon.

To the right of the film forming device 14 a precharge station 18 is provided whereat an electrically conductive wire 20 is held in a position close to but out of contact with the outer surface of the film. This wire, which extends the width of the substrate and film, is connected to the positive side of a source 22 of high voltage dc potential controllable between 4 to 10 Kv. The negative side of the source is connected to the substrate 10. Preferably the wire is positioned approximately 1 cm from both the substrate 10 and its housing or protective shield 23. The result is the establishment of an electric field through the film. In some cases, discussed below, for optimum results, the potential should be great enough to cause a corona to exist around the wire 20. This field, in the polarity stated, will cause the particles 16 to migrate to a position close to or at the substrate, as diagrammatically shown in Fig 1 at station 18. The effect of corona is further discussed below. Also, the possible elimination of station 18 is discussed below.

Next to the right in Fig 1 is an irradiating station 24 whereat particle activating electromagnetic radiation from a source 26 follows a path 28 to and into the film 12 to establish an electric field through the film in the region whereat the activating energy impinges upon the film. Monochromatic radiation may be achieved by a laser source, a gas discharge tube, an arc lamp, an incandescent lamp or the like. The wavelength of the radiation will be selected to afford best results with the dielectric material and particulate material used in the film. The wavelength used could be in the visible or invisible part of the spectrum. With the dielectric material and the particles mentioned above, the preferred wavelength will depend on the materials used. For example, if cyan ink reflects radiation from 380 to 600 nm, and it absorbs radiation from 600 nm to 750 nm, then the light source should provide an output in the range from 600 nm to 750 nm.

A radiation modulating device or devices will be provided to control the radiation reaching the film. The modulation may be achieved in several ways, ranging from control of the radiation course itself to means in the radiation path for blocking all or some of the radiation as a function of time. Examples are given later in this specification. For immediate purposes a modulation device in the form of a movable mask is shown at 30 in Fig 1.

A further wire 32 is mounted to extend across the width of the substrate and film in the path of the radiation to serve as a field establishing device. Wire 32, like wire 20, will be close to but above the outer surface of the film, eg., 1 cm, and is connected to the positive side of a voltage source 33. Again an electric corona field preferably is created through the film by use of wire 32. A cover or housing 34 which is slotted at 36 to pass the activating radiation is used to optimize the electric field, and shield the ink from spurious light during exposure. Wire 32 may be used without wire 20 or in conjucntion with wire 20. Wire 20 may be used without wire 32.

The radiation which impinges upon the film causes a change in charge of the particles from positive to negative, whereupon the particles so changed will migrate away from the substrate and move upward in the film, as diagrammatically indicated in Fig 1. However, the particles which are not irradiated remain in proximity to the substrate.

To the right of the radiation station a particle removal member 38 is provided. In one form the removal member 38 is an elastomeric dielectric blanket fitted to surround a metal cylinder 40 to be fixed thereto. In another form the removal member 38 may be a belt or web simply trained over the cylinder 40 (FIG. 6). Moreover, the removal member 38 may be the ultimate web of paper or the like on which the resultant image is permanently recorded. In this case it is trained over the cylinder 40, from which it extends to its source and to its destination. In each case the member 38 is guided so that it dips into the film 12, and by virtue of a positive charge placed upon the cylinder 40 from a voltage source 41, collects the irradiated particles upon the surface of member 38. The voltage source 41 may be electrically connected to the cylinder 40 via a suitable brush or slip ring device 43. The amount of squeeze (depth of penetration into film 12) between the member 38 and the substrate 10 is determined experimentally, and is a function of the rheology of the film. However, a squeeze of approximately 0.025 to 0.125 mm is the recommended range.

It will be understood that as shown in FIG. 1 the substrate is being caused to move from left to right, as indicated by arrow 42, while the group of components 14, 20, 32 and the axis of cylinder 40 are held in fixed position relative to one another and to the path of travel of the substrate.

The angular velocity of the cylinder 40 preferably will be controlled (by means not shown) so that the peripheral velocity of the removal member 38 will equal the velocity of the substrate.

Finally, the pattern of particles on the surface of member 38 may be transferred to a running paper web 44 guided by a transfer roller 46. The transfer of particles from the removal member 38 to the web 44 may be enhanced by establishing a dc potential between member 38 and roller 46. This may be done by use of an auxiliary source 47 to place roller 46 at a positive potential relative to the member 38. A potential difference of 2 to 10 Kv is used, depending on the electrical capabilities of the elastomeric dielectric blanket that is used on member 38. Beyond the transfer point a scraper 48 may be used to clean the surface of member 38 before it re-enters the film.

If the liquid dielectric material contains high solvent loading, the bulk of the solvent will be carried over to the first cylinder, but not to the paper. Alternatively, scraper 48 may be replaced with a hard, electrically charged roll (not shown). This roll would transfer any remnant image to it. A scraper blade could then clean the hard roll, thus lengthening the life of the blanket on member 38. The image on member 38 need not be transferred to roll 46. If the roll 46 were removed and the web were placed on member 38, imaging would take place as well. However, a disadvantage would exist, in that a paper web has a tendency to absorb the solvent.

It is to be understood that FIG. I is not to scale. On the contrary, the dimensions, particularly of the thickness of the film, the diameters of the particles, the spacing of the charging wires from the substrate and the spacing between the substrate and the member 38 have been exaggerated for clarity. For the same reason the distance between the charging wire 20 to the charging wire 32 is exaggerated, as is the distance from wire 32 to the removal member 38. In practice these distances should be kept as short as possible.

It should be understood that the voltages on the wires 20 and 32, as well as the voltages on the drums 46 and 38 were positive for the aforementioned explanation. However, they may be negative, for the appropriate operating conditions associated with the photoactive particles and or photoactive composite particles in the dielectric fluid.

From FIG. I it will be seen that the distribution of particles from bottom to top of the film is in a pattern dictated by the on-off periods of the radiation. Inasmuch as the film has a width dimension (into the paper as viewed in FIG. I), the control of the radiation widthwise of the film permits the establishment of a two-dimensional pattern on the surface of member 38, and upon the web 44.

The control of the radiation may be effected by a line scan similar to that used in television, with the radiation beam responding to amplitude modulation as is done in television. However, the control of the radiation could be digital rather than analog. Alternatively, a narrow elongated beam of radiation may be established by the source 26, and this interrupted from point to point widthwise of the film by mechanically movable mask means 30. Alternatively, a laser raster scanner, as used in laser printers, may be used.

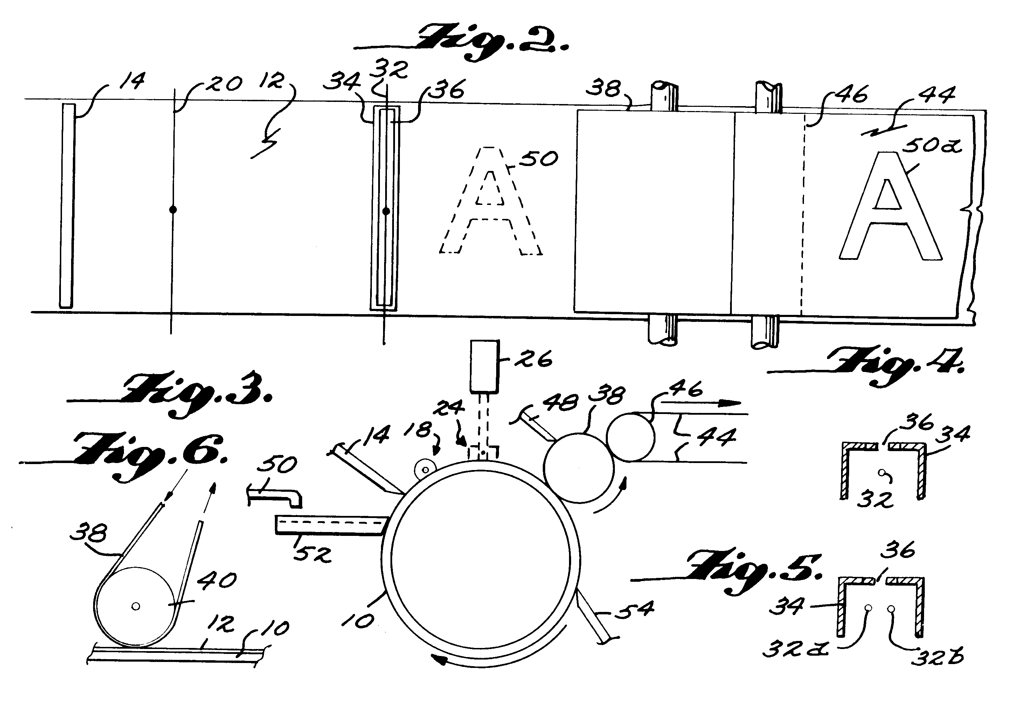

FIG. 2 is a plan view of the principal features of the apparatus shown in FIG. I. This plan view showing the wire 32 and slot 36 facilitates an understanding that if a small diameter beam of radiation is repeatedly scanned along the slot, and modulated on-off as it moves, a two dimensional pattern will be scanned onto the film, due to the movement of the film and substrate (see arrow 42, FIG. I) as the line scan progresses. Supposing that the scanning operation has created an image pattern 50 of negatively charged particles in the film in the shape of a letter A as shown, a similar printed pattern 50a will later appear on the web 44. It will be noted that the image pattern being established by the scanning procedure may be changed at any time. If the beam intensity is altered as it is scanned, and the ink film consists of particles which have the appropriate response, then several tones of grey could be printed.

Fig 3 shows the system of Figs 1 and 2 with the substrate 10 shown as the outer surface of a cylinder. In this view the film forming means is shown to include a conduit 50 for the supply of the dielectric fluid with particles therein into a suitable applicator device 52. Applicators such as ink trains, reverse metering rolls, air knives, etc. can be used with the dielectric fluid of the appropriate rheological characteristics. During rotation of the substrate the film is established in suitable thickness by the doctor blade 14 and the other events described with reference to Figs 1 and 2 will follow. A scraper 54 may be added to remove any remaining particles from the substrate before the application of fresh dielectric at the device 52. The removed ink can be reconstituted with the proper addition of dielectric solvent and reused in the system. Alternatively, the remnant ink on the imaging member could be recoated with fresh dielectric material at 52.

The structure for establishing the electrostatic field at the irradiating station 24 is of particular importance to the present invention. While no field need be established at 24 if voltage is applied at station 18, using a field at station 24 is preferred. In Fig 1, the structure at station 24 uses a single wire 32 centered in the radiation path. A cross-sectional view of the cover and single wire structure is shown in FIG. 4. While very enhanced results are thus achieved, nevertheless the wire may tend to cast a shadow on the film, with the result that what should be a single line in the output pattern may be two lines.

By use of another aspect of the present invention the shadow may be eliminated. This is accomplished by a two-wire structure shown in FIG. 5. In this case the wires 32a and 32b are held on opposite sides of the radiation beam that comes through the slot 36 in the shield 34. The interior of the shield 34 is preferably painted black (in either the single or double wire construction), with a flat finish, to minimize internal reflections. Paint such as the optical black paint sold by the 3M company may be used.

When the single wire construction is used the wire is located equidistant from two sides of the shield. The distance of the wire to the ink has little effect on image quality; however, the wire should be located at least 5 mm away from the ink to avoid arcing. The farthest distnce that the wire may be positioned will depend on the amount of voltage available in the power supply, and the design of the assembly. It is typical to not use more than 10 Kv. The output of the power supply may be limited to 1 ma for safety.

When the two-wire structue is used (FIG. 5), preferably the wires are located equidistant from two walls of the shield and from each other. They also should be located equidistant from the slotted top surface of the shield and dielectric fluid film.

Again, the distance of the wires to the ink has little effect on image quality; however, the wires should be located at least 5 mm away from the ink to avoid arcing. The farthest distance that the wires may be positioned will depend on the amount of voltage available from the power supply and the design of the assembly. As in the one-wire case, it is preferable to not use more than 10 Kv with the output of the power supply limited to 1 ma for safety.

It has been discovered that there is a relationship between the movement of the film past the stations 18 and 24 and the effect of potentials upon the wires 20 and 32. It is preferable at all times to have a voltage on wire 32 (or wires 32a-32b) and have it at the greatest voltage that is possible before arcing over to the substrate would occur. However, voltage on wire 20 may not be necessary at all at slow speeds of the substrate/film. Assuming a series of test runs, with only a voltage on wire 32 (or 32a-32b) the image will begin to deteriorate at some speed as the speed increases (image areas fading, and non-image (background) areas becoming dirty). At this speed, it is desirable to begin applying a voltage to wire 20. As speed is increased an increase of voltage on wire 20 will prevent image deterioration as aforesaid. The limit will be when more voltage on wire 20 would result in arcing. Whether or not wire 20 is necessary depends upon the speed at which the film moves past the stations 18 and 24. For speeds of 500 feet per minute (fpm) (154 m/min) or less, wire 20 is not necessary. At speeds above 500 fpm (154 m/min) the image definition begins to deteriorate, and using wire 20 becomes beneficial. A limit to coronaproducing potentials does arise at the point where arcing begins to occur, and arcing cannot be tolerated. Arcing in normal atmospheric conditions (air) can be avoided if approximately 1 mm of distance from the wire 20 to the surface of film 12 is provided for each 1000 volts (1 Kv) applied. However, this can be modified by configurations and/or atmosphere. Use of a two-wire structure (FIG. 5) provides a partial solution by configuration. By applying a constant voltage to one of the wires and varying the voltage of the other wire directly proportional to the speed, a range of speeds having good image integrity can be obtained. For example, at speeds below 350 fpm (108 m/min) only a single wire 6 Kv corona might be used. At speeds of 500 fpm (154 m/min), 4 Kv may be applied to the second wire in addition to the 6 Kv on the other wire. The atmosphere surrounding the corona also determines the arcing distance. In air, the rule is approximately 1 mm distance for each Kv. In other gases, it may be possible to increase the voltage and/or current without increasing the distance from the surroundings to the wire.

It will now be apparent to the reader that this invention, which does not require a substrate that is transparent to the activating radiation, permits printing on drum type presses without having to direct the radiation into the interior of a transparent cylinder. The benefits of avoiding any such complication are extremely significant.

In summary, the present invention makes possible high speed printing with no need to stop a press to change a printing plate. This invention is in the true sense plateless printing, since there is no printing plate, photoconductor, dielectric drum of other devices which take the place of the printing plate. Printing speeds of 850 feet per minute (262 m/min) have been experienced.

**Claims**

1. Printing apparatus comprising:

an electrically conductive substrate (10) of given width,

means for forming a liquid film (12) on the substrate, the liquid being a dielectric material with electrically chargeable particles therein,

an irradiating station (24) whereat particle activating electromagnetic radiation is applied to the film from a source (26) and including means (30) at the irradiating station to modulate the radiation;

means (32) to establish an electric field through the film in the region whereat the activating energy impinges upon the film,

a particle removal member (38) in contact with the film (12) for removing predetermined particles (16) from the film (12) according to charges placed on certain particles (16) due to the irradiating action and leaving in the film other of the particles (16) not receiving the charges due to the irradiating action, thereby forming an image (50) on the particle removal member in a pattern established by the modulation,

characterised in that the source (26) is positioned to place the film (12) between the source (26) and the substrate (10), the means for forming the liquid film (12) on the substrate (10), the irradiating station (24) and the location where the particle removal member (38) contacts the film (12) are positioned as a group in sequence in that order, and

characterised by means for causing relative movement between the film bearing substrate (10) and the aforesaid group of components in a direction to cause the substrate to move past the components in the aforesaid sequence, the irradiating station (24) being located upstream of the position where the removal member (38) contacts the film (12),

the arrangement being such that particles (16) in the film (12) will undergo a change in charge at the irradiating station (24) due to the effect of the radiation and will migrate away from the substrate, and the migrated particles (16) will be removed from the film (12) by the removal member (38) and placed on the removal member in a pattern established by the modulation of radiation at the irradiating station (24).

2. Printing apparatus according to claim 1 characterised in that there is provided a precharge station (18) whereat an electric field is caused to exist through the film.

3. Printing apparatus according to claim 1 or 2 in which the particle removal member (38) is fixed to the surface of a cylinder (40).

4. Printing apparatus according to claim 1 or 2 in which the particle removal member is a belt trained over a cylinder.

5. Printing apparatus according to claim 1 or 2 in which the particle removal member is a web (38) upon which the particles are to be permanently placed.

6. Printing apparatus according to any one of the preceding claims in which means (46) are provided for transferring the particle pattern on the removal member to a web (44) of output material.

7. Printing apparatus according to any one of the preceding claims wherein the substrate has a given length.

8. Printing apparatus according to any one of claims 1 to 6 in which the substrate (10) is the surface of a cylinder and therefore of continuous length.

9. Printing apparatus according to claim 1 in which the field establishing device comprises a single wire (32) or a pair of wires positioned above the film and located in the path of the beam of radiation entering the film.

10. Printing apparatus according to claim 1 in which the electric field is of sufficient strength to cause a corona to exist.

11. Printing apparatus according to claim 2 or any claim dependent on claim 2 in which the electric field at the precharge station (18) is of sufficient strength to cause a corona to exist.

12. Printing apparatus comprising: according to any of claims 1 to 11;

characterised in that the electrically chargeable particles (16) suspended in the liquid film as formed are of an initial charge state, the particles being responsive to the application of an electric field and responsive to imaging irradiation to change their charge state from their initial charge state to a second charge state different from said initial charge state;

and in which said removing member (38) has a charge state the same as the initial charge state to attract and remove the irradiated particles of the second charge state from the film and leave the un-irradiated particles of the initial charge state in the film.

13. Printing apparatus according to one of claims 1 to 11 including means for controlling the radiation by line scan.

14. A printing method comprising the steps of providing an electrically conductive substrate of given length and width,

placing a liquid film on the substrate,

the liquid being a dielectric material with electrically chargeable particles therein,

providing an irradiating station whereat particle activating electromagnetic radiation is applied to the film,

modulating the radiation at the irradiating station in accordance with information to be printed,

providing a member in contact with the film for removing predetermined particles from the film,

characterised by positioning the irradiating station on the opposite side of the film from the substrate,

arranging to position the means for placing the film on the substrate, the irradiating station and the particle removal member where it contacts the film as a group in sequence in that order, and

providing means for causing relative movement between the substrate and the aforesaid group of components in a direction to cause the substrate to move past the components in the aforesaid sequence, the irradiating station being located upstream of the position where the removal member contacts the film,

the sequence of steps being such that certain of the particles will undergo a change in charge at the irradiating station and will migrate away from the substrate, and the migrated particles will be removed from the film by the removal member and placed on the removal member in a pattern established by the modulation of radiation at the irradiating station.

**Revendications**

1. Appareil d'impression comprenant:

un substrat électriquement conducteur (10) ayant une largeur donnée,

des moyens pour former une pellicule de liquide (12) sur le substrat, le liquide étant un matériau diélectrique contenant des particules pouvant être chargées électriquement,

un poste d'exposition au rayonnement (24) auquel un rayonnement électromagnétique d'activation des particules, est appliqué à la pellicule en provenance d'une source (26), ce poste comprenant des moyens (30), au poste d'exposition au rayonnement, pour moduler celui-ci;

des moyens (32) pour établir un champ électrique à travers la pellicule dans la région de celle-ci où l'énergie d'activation frappe cette pellicule,

un élément d'enlèvement de particules (38) en contact avec la pellicule (12) pour enlever des particules déterminées (16) de cette pellicule (12), en fonction de charges données à certaines particules (16) en raison de l'effet de l'exposition au rayonnement, et laisser dans la pellicule d'autres particules (16) ne recevant pas les charges dûes à l'effet de l'exposition au rayonnement, formant ainsi une image (50) sur l'élément d'enlèvement de particules, suivant un dessin établi par la modulation,

caractérisé en ce que la source (26) est positionnée pour placer la pellicule (12) entre cette source (26) et le substrat (10), les moyens pour former la pellicule de liquide (12) sur le substrat (10), le poste d'exposition au rayonnement (24), et l'endroit dans lequel l'élément (38) d'enlèvement de particules est en contact avec la pellicule (12), sont disposés en un groupe, en séquence dans cet ordre, et

caractérisé en outre par des moyens pour provoquer un déplacement relatif entre le substrat (10) portant la pellicule et le groupe précité de composants, dans une direction apte à forcer le substrat à se déplacer au-delà des composants dans la séquence précitée, le poste d'exposition au rayonnement (24) étant situé en amont de la position dans laquelle l'élément (38) d'enlèvement est en contact avec la pellicule (12),

l'agencement étant tel que des particules (16) dans la pellicule (12) subissent un changement de charge au poste d'exposition au rayonnement (24), dû à l'effet de ce rayonnement, et migrent en s'éloignant du substrat, et les particules (16) ayant migré sont extraites de la pellicule (12) par l'élément d'enlèvement (38) et placées sur ledit élément suivant un dessin établi par la modulation du rayonnement au poste d'exposition au rayonnement (24).

**2.** Appareil d'impression suivant la revendication 1, caractérisé en ce qu'il est prévu un poste de charge préalable (18) auquel un champ éctrique est astreint à se produire à travers la pellicule.

**3.** Appareil d'impression suivant la revendication 1 ou 2, dans lequel l'élément (38) d'enlèvement de particules est fixé à la surface d'un cylindre (40).

**4.** Appareil d'impression suivant les revendications 1 ou 2, dans lequel l'élément d'enlèvement de particules est une courroie tendue sur un cylindre.

**5.** Appareil d'impression suivant la revendicatrion 1 ou 2, dans lequel l'élément d'enlèvement de particules est une bande (38) sur laquelle les particules doivent être placées de façon permanente.

**6.** Appareil d'impression suivant l'une quelconque des revendications précédentes, dans lequel des moyens (46) sont prévus pour transférer le dessin de particules se trouvant sur l'élément d'enlèvement, sur une bande (44) de matériau de sortie.

**7.** Appareil d'impression suivant l'une quelconque des revendications précédentes, des lequel le substrat a une longueur donnée.

**8.** Appareil d'impression suivant l'une quelconque des revendications 1 à 6, dans lequel le substrat (10) est la surface d'un cylindre et, par conséquent, a une longueur continue.

**9.** Appareil d'impression suivant la revendication 1, dans lequel le dispositif d'établissement de champ comprend un fil métallique unique (32) ou deux fils métalliques disposés au-dessus de la pellicule et situés dans le trajet du faisceau de rayonnement pénétrant dans la pellicule.

**10.** Appareil d'impression suivant la revendication 1, dans lequel le champ électrique a une force suffisante pour provoquer un effet corona.

**11.** Appareil d'impression suivant la revendication 2, ou l'une quelconque des revendications dépendantes de la revendication 2, dans lequel le champ électrique au poste de charge préalable (18) a une force suffisante pour provoquer un effet corona.

**12.** Appareil d'impression tel que défini suivant l'une quelconque des revendications 1 à 11, caractérisé en ce que des particules (16) pouvant être chargées électriquement et en suspension dans la pellicule de liquide telle que formée ont un état de charge initial, les particules étant sensibles à l'application d'un champ électrique et sensibles à un rayonnement de formation d'image pour modifier leur état de charge à partir de leur état de charge initial pour passer à un second état de charge, différent dudit état de charge initial;

et dans lequel ledit élément d'enlèvement (38) a un état de charge qui est le même que l'état de charge initial pour attirer et retirer de la pellicule les particules au second état de charge qui ont été exposées au rayonnement, et laisser dans ladite pellicule les particules à l'état initial de charge, qui n'ont pas été exposées au rayonnement.

**13.** Appareil d'impression suivant l'une des revendications 1 à 11, comprenant des moyens pour commander le rayonnement par balayage linéaire.

**14.** Procédé d'impression comprenant les phases consistant:

à fournir un substrat électriquement conducteur d'une longueur et d'une largeur données,

à placer une pellicule liquide sur le substrat, le liquide étant un matériau diélectrique contenant des particules pouvant être chargées électriquement,

à prévoir un poste d'exposition à un rayonnement, dans lequel un rayonnement électromagnétique d'activation des particules est appliqué à la pellicule,

à moduler le rayonnement au poste d'exposition au rayonnement, conformément à l'information à imprimer,

à prévoir un élément en contact avec la pellicule pour enlever des particules prédéterminées de ladite pellicule,

caractérisé en ce que:

on place le poste d'exposition au rayonnement sur le côté opposé de la pellicule, à partir du substrat,

on positionne les moyens pour placer la pellicule sur le substrat, le poste d'exposition au rayonnement et l'élément d'enlèvement de particules, à l'endroit où il est en contact avec la pellicule, en un groupe, en séquence dans cet ordre, et

on prévoit des moyens pour provoquer un déplacement relatif entre le substrat et le groupe précité de composants dans une direction apte à astreindre le substrat à se déplacer devant lesdits composants dans la séquence précitée, le poste d'exposition au rayonnement étant situé en amont de l'endroit où l'élément d'enlèvement est en contact avec la pellicule,

la séquence des phases étant telle que certaines des particules subissent un changement de charge au poste d'exposition au rayonnement, et migrent en s'éloignant du substrat, les particules ayant migré étant retirées de la pellicule par l'élément d'enlèvement et placées sur ce dernier suivant un dessin établi par la modulation du rayonnement au poste d'exposition au rayonnement.

**Patentansprüche**

1. Druckvorrichtung mit

einem elektrisch leitfähigen Substrat (10) gegebener Breite,

Mitteln zum Bilden eines Flüssigkeitsfilms (12) auf dem Substrat, wobei die Flüssigkeit ein dielektrischer Stoff mit darin enthaltenen elektrisch aufladbaren Partikeln ist,

einer Bestrahlungsstation (24), an der die Partikel aktivierende elektromagnetische Strahlung aus einer Quelle (26) auf den Film aufgebracht wird und die Mittel (30) an der Bestrahlungsstation zum Modulieren der Strahlung einschließt,

Mitteln (32) zum Aufbauen eines elektrischen Felds durch den Film in dem Bereich, in dem die aktivierende Energie auf den Film trifft,

einem Partikelaufnahmeteil (38) in Berührung mit dem Film (12) zum Entfernen vorherbestimmter Partikel (16) aus dem Film (12) in Übereinstimmung mit Ladungen, die durch die Strahlungseinwirkung auf bestimmte Partikel (16) aufgebracht wurden, und zum Belassen anderer, keine Ladungen durch die Strahlungseinwirkung erhaltende Partikel (16) in dem Film, wodurch ein Bild (50) auf dem Partikelaufnahmeteil in einem durch die Modulation erzeugten Muster gebildet wird,

dadurch **gekennzeichnet,** daß die Quelle (26) so angeordnet ist, daß der Film (12) zwischen der Quelle (26) und dem Substrat (10) liegt, wobei die Mittel zum Bilden des Flüssigkeitsfilms (12) auf dem Substrat (10), die Bestrahlungsstation (24) und die Stelle, an der das Partikelaufnahmeteil (38) den Film (12) berührt, als eine Gruppe in dieser Reihenfolge angeordnet sind, und

**gekennzeichnet** durch Mittel zum Erzeugen einer Relativbewegung zwischen dem filmtragenden Substrat (10) und der vorgenannten Gruppe von Bestandteilen in einer Richtung, um das Substrat entlang der Bestandteile in der vorgenannten Reihenfolge zu bewegen, wobei die Bestrahlungsstation (24) vor der Stelle angeordnet ist, an der das Aufnahmeteil (38) den Film (12) berührt, und wobei

die Anordnung derart ist, daß Partikel (16) im Film (12) in der Bestrahlungsstation (24) aufgrund der Wirkung der Strahlung eine Ladungsänderung erfahren und vom Substrat wegwandern, wobei die weggewanderten Partikel (16) von dem Film (12) durch das Aufnahmeteil (38) entfernt und auf dieses entsprechend einem Muster plaziert werden, welches durch die Strahlungsmodulation in der Bestrahlungsstation (24) erzeugt worden ist.

2. Druckvorrichtung nach Anspruch 1, dadurch **gekennzeichnet,** daß eine Vorladestation (18) vorhanden ist, an der ein durch den Film gehendes elektrisches Feld erzeugt wird.

3. Druckvorrichtung nach Anspruch 1 oder 2, bei der das Partikelaufnahmeteil (38) auf der Oberfläche eines Zylinders (40) befestigt ist.

4. Druckvorrichtung nach Anspruch 1 oder 2, bei der das Partikelaufnahmeteil (38) ein über einen Zylinder gezogenes Band ist.

5. Druckvorrichtung nach Anspruch 1 oder 2, bei der das Partikelaufnahmeteil eine Bahn (38) ist, auf die die Partikel fortdauernd plaziert werden.

6. Druckvorrichtung nach einem der vorhergehenden Ansprüche, bei der Mittel (46) zum Übertragen des Partikelmusters auf dem Aufnahmeteil auf eine Bahn (44) aus Ausgabematerial vorhanden sind.

7. Druckvorrichtung nach einem der vorhergehenden Ansprüche, bei der das Substrat eine gegebene Länge hat.

8. Druckvorrichtung nach einem der Ansprüche 1 bis 6, bei der das Substrat (10) die Oberfläche eines Zylinders und daher von ununterbrochener Länge ist.

9. Druckvorrichtung nach Anspruch 1, bei der das felderzeugende Gerät einen einzelnen Draht (32) oder ein Paar Drähte aufweist, die über dem Film angeordnet sind und im Strahlungsweg von in den Film eindringender Strahlung liegen.

10. Druckvorrichtung nach Anspruch 1, bei der das elektrische Feld eine zum Erzeugen einer beständigen Korona ausreichende Stärke hat.

11. Druckvorrichtung nach Anspruch 2 oder einem davon abhängigen Anspruch, bei der das elektrische Feld in der Vorladestation eine zum Erzeugen einer beständigen Korona ausreichende Stärke hat.

12. Druckvorrichtung nach einem der Ansprüche 1 bis 11,

dadurch **gekennzeichnet,** daß die elektrisch aufladbaren, in dem Flüssigkeitsfilm wie gebildet fein verteilten Partikel (16) einen Anfangsladungszustand haben, wobei die Partikel auf die Aufbringung eines elektrischen Felds und auf bildgebende Bestrahlung ansprechen, um ihren Ladungszustand ausgehend von ihrem Anfangsladungszustand in einen zweiten, von dem Anfangsladungszustand verschiedenen Ladungszustand zu ändern,

und bei der das genannte Aufnahmeteil (38) einen mit dem Anfangsladungszustand übereinstimmenden Ladungszustand hat, um die bestrahlten Partikel mit dem zweiten Ladungszustand aus dem Film anzuziehen und zu entfernen und die unbestrahlten Partikel mit dem Anfangsladungszustand in dem Film zu belassen.

13. Druckvorrichtung nach einem der Ansprüche 1 bis 11, einschließend Mittel zum Überwachen der Strahlung durch Zeilenabtastung.

14. Druckverfahren mit den Schritten des Bereitstellens eines elektrisch leitfähigen Substrats gegebener Länge und Breite,

des Aufbringens eines Flüssigkeitsfilms auf das Substrat,

wobei die Flüssigkeit ein dielektrischer Stoff mit darin enthaltenen elektrisch aufladbaren Partikeln ist,

des Bereitstellens einer Bestrahlungsstation, an der die Partikel aktivierende elektromagnetische Strahlung auf den Film aufgebracht wird,

des Modulierens der Strahlung in der Bestrahlungsstation in Abhängigkeit der zu druckenden Information,

des Bereitstellens eines mit dem Film in Berührung befindlichen Teils zum Entfernen vorbestimmter Partikel aus dem Film,

**gekennzeichnet** durch Anordnen der Bestrahlungsstation auf der dem Substrat gegenüberliegenden Seite des Films,

Anordnen der Mittel zum Aufbringen des Films auf das Substrat, der Bestrahlungsstation und des Partikelaufnahmeteils, dort wo es den Film berührt, als eine Gruppe in dieser Reihenfolge, und

Bereitstellen von Mitteln zum Erzeugen von Relativbewegung zwischen dem Substrat und der vorgenannten Gruppe von Bestandteilen in einer Richtung, um das Substrat entlang der Bestandteile in der vorgenannten Reihenfolge zu bewegen, wobei die Bestrahlungsstation vor der Stelle angeordnet ist, an der das Aufnahmeteil den Film berührt, und wobei

die Reihenfolge der Schritte so ist, daß bestimmte Partikel in der Bestrahlungsstation eine Ladungsänderung erfahren und von dem Substrat wegwandern und die weggewanderten Partikel von dem Aufnahmeteil aus dem Film entfernt und auf dieses in einem Muster plaziert werden, das durch die Strahlungsmodulation in der Bestrahlungsstation erzeugt worden

# Fig.1

EP 0 253 551 B1

*Fig.2.*

*Fig.3.*

*Fig.6.*

*Fig.4.*

*Fig.5.*

EP 0 253 551 B1